(19) Europäisches Patentamt / European Patent Office / Office européen des brevets

(11) **EP 2 812 194 B1**

(12) **FASCICULE DE BREVET EUROPEEN**

(45) Date de publication et mention
de la délivrance du brevet:
**06.04.2016 Bulletin 2016/14**

(21) Numéro de dépôt: **13702045.9**

(22) Date de dépôt: **31.01.2013**

(51) Int Cl.:
***B60C 9/20*** *(2006.01)*

(86) Numéro de dépôt international:
**PCT/EP2013/051844**

(87) Numéro de publication internationale:
**WO 2013/117476 (15.08.2013 Gazette 2013/33)**

(54) **PNEUMATIQUE A STRUCTURE DE CEINTURE ALLÉGÉE**

RADIALREIFEN MIT LEICHTERER GÜRTELSTRUKTUR

RADIAL TYRE WITH LIGHTENED BELT STRUCTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.02.2012 FR 1251215**

(43) Date de publication de la demande:
**17.12.2014 Bulletin 2014/51**

(73) Titulaires:
• **Compagnie Générale des Etablissements
Michelin
63000 Clermont-Ferrand (FR)**
• **MICHELIN Recherche et Technique S.A.
1763 Granges-Paccot (CH)**

(72) Inventeurs:
• **LARDJANE, Aurore
F-63040 Clermont-Ferrand Cedex 9 (FR)**
• **LE CLERC, Christophe
F-63040 Clermont-Ferrand Cedex 9 (FR)**
• **MOREL-JEAN, Jacques
F-63040 Clermont-Ferrand Cedex 9 (FR)**
• **VERLEENE, Arnaud
F-63040 Clermont-Ferrand Cedex 9 (FR)**

(74) Mandataire: **Ribière, Joel
Manufacture Française des
Pneumatiques Michelin
23, place des Carmes-Déchaux
DGD/PI - F35 - Ladoux
63040 Clermont-Ferrand Cedex (FR)**

(56) Documents cités:
**EP-A2- 1 066 989      DE-A1-102009 025 793
JP-A- 2002 029 214**

**Description**

1. DOMAINE DE L'INVENTION

La présente invention est relative aux pneumatiques et à leur armature de sommet ou ceinture. Elle se rapporte plus particulièrement aux stratifiés composites multicouche utilisés dans la ceinture des pneumatiques notamment pour véhicule tourisme ou camionnette.

2. ETAT DE LA TECHNIQUE

Un pneumatique à armature de carcasse radiale pour véhicule tourisme ou camionnette comporte, on le sait, une bande de roulement, deux bourrelets inextensibles, deux flancs souples reliant les bourrelets à la bande de roulement et une armature de sommet rigide ou « ceinture » (*"belt"*) disposée circonférentiellement entre l'armature de carcasse et la bande de roulement.

La ceinture de pneumatique est généralement constituée par au moins deux nappes de caoutchouc dites « nappes de travail », « nappes de triangulation » ou encore « armature de travail », superposées et croisées, renforcées le plus souvent de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au pneu une rigidité ou poussée de dérive (en anglais, *"drift thrust"* ou *"cornering"*) élevée, nécessaire de manière connue pour l'obtention d'un bon comportement routier (*"handling"*) sur véhicule automobile.

La ceinture ci-dessus, ce qui est particulièrement le cas pour les pneumatiques susceptibles de rouler à haute vitesse de manière soutenue, peut comporter en outre une nappe de caoutchouc dite « nappe de frettage » ou « armature de frettage » qui est renforcée généralement par des fils de renforcement dits « circonférentiels », c'est-à-dire que ces fils de renforcement sont disposés pratiquement parallèles les uns aux autres et s'étendent sensiblement circonférentiellement autour de l'enveloppe pneumatique de manière à former un angle préférentiellement compris dans un domaine de 0 à 5° avec le plan circonférentiel médian. Ces fils de renforcement circonférentiels ont pour fonction première, on le rappelle, de résister à la centrifugation du sommet à haute vitesse.

De telles structures de ceintures, consistant finalement en un stratifié composite multicouche comportant au moins une nappe de frettage, le plus souvent textile, et deux nappes de travail généralement métalliques, sont bien connues de l'homme du métier et ne nécessitent pas d'être décrites ici plus en détail.

L'état de la technique décrivant de telles structures de ceintures est illustré en particulier par les documents brevet US 4 371 025, FR 2 504 067 ou US 4 819 705, EP 738 615, EP 795 426 ou US 5 858 137, EP 1 162 086 ou US 2002/0011296, EP 1 184 203 ou US 2002/0055583.

Le document EP1066989 divulgue un pneumatique ayant les caractéristiques techniques du préambule de la revendication 1.

La disponibilité en aciers de plus en plus résistants et endurants fait que les manufacturiers de pneumatiques s'orientent aujourd'hui, autant que possible, vers l'emploi dans les ceintures de pneumatiques de câbles à structure très simple, notamment à seulement deux fils, voire même de filaments unitaires, afin d'une part de simplifier la fabrication et diminuer les coûts, d'autre part de diminuer l'épaisseur des nappes de renforcement et ainsi l'hystérèse des pneumatiques, en fin de compte réduire la consommation d'énergie des véhicules équipés de tels pneumatiques.

Les efforts visant à réduire la masse des pneumatiques, en particulier par une réduction d'épaisseur de leur ceinture et des couches de caoutchouc la constituant, se heurtent toutefois, bien naturellement, à des limites physiques qui peuvent donner lieu à un certain nombre de difficultés. Il peut notamment se produire que la fonction de frettage apportée par l'armature de frettage et celle de rigidification apportée par l'armature de travail ne soient plus suffisamment différenciées l'une de l'autre et puissent se perturber mutuellement, sans parler des risques de contacts directs entre les fils circonférentiels textiles et les câbles métalliques des nappes de travail. Bien entendu, tout ceci est préjudiciable au bon fonctionnement du sommet du pneumatique, à la performance et l'endurance globale du pneumatique.

3. BREVE DESCRIPTION DE L'INVENTION

Or, au cours de leurs recherches, les Demanderesses ont trouvé un stratifié composite multicouche de structure spécifique qui permet d'alléger notablement la ceinture des pneumatiques, et donc abaisser leur résistance au roulement, tout en palliant les inconvénients cités ci-dessus.

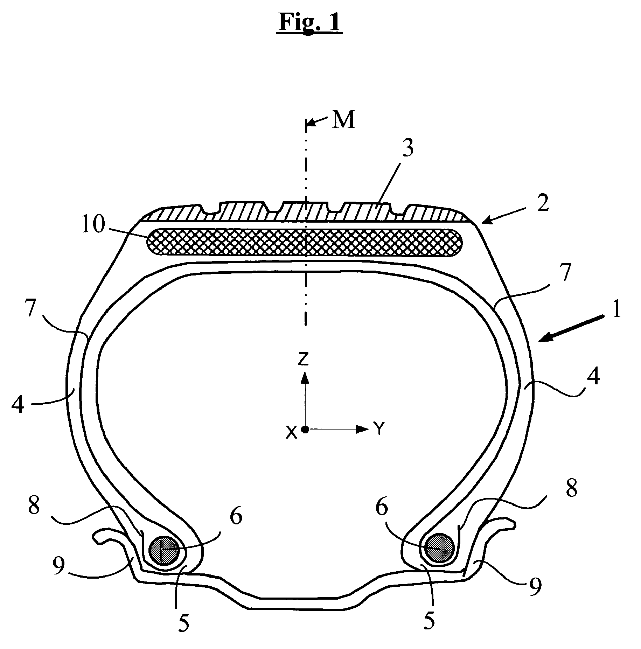

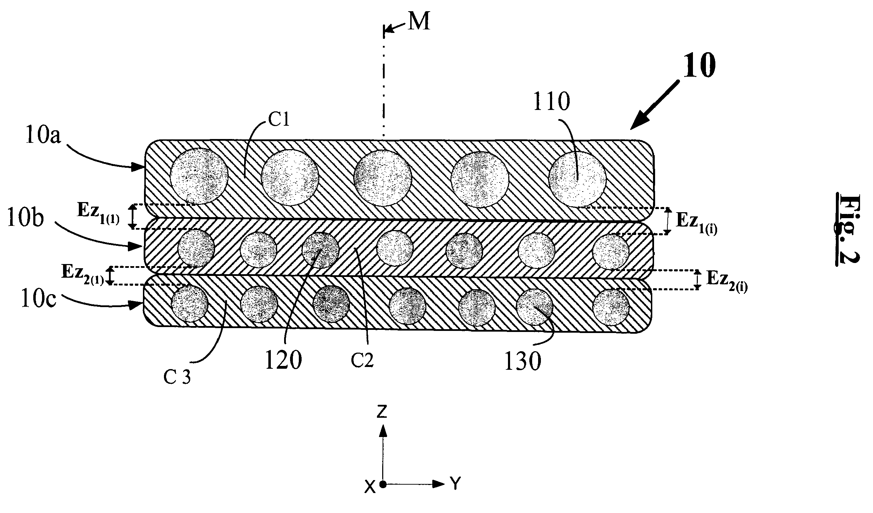

Ainsi, selon un premier objet, la présente invention concerne (selon les références données aux figures 1 et 2 annexées) un pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) et dans le sommet (2), une armature de sommet ou ceinture (10) s'étendant dans le sommet (2) selon la direction circonférentielle (X) et située radialement entre l'armature de carcasse (7) et la bande de roulement (3), ladite ceinture (10) comportant un stratifié composite multicouche (10a, 10b, 10c) comportant au moins trois couches superposées de renforts (110, 120, 130), lesdits renforts étant dans chaque couche unidirectionnels et noyés dans une épaisseur de caoutchouc (C1, C2, C3), avec :

    ◦ côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
    ◦ au contact de la première couche (10a) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
    ◦ au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), ces renforts (130) dits troisièmes renforts étant des renforts métalliques ;

ce pneumatique étant caractérisé d'une part en ce que :

    ◦ les deuxièmes (120) et troisièmes (130) renforts consistent en des monofilaments en acier dont le diamètre, noté respectivement D2 et D3, est compris entre 0,20 mm et 0,50 mm ;
et en ce que les caractéristiques suivantes, mesurées dans la partie centrale de la ceinture du pneumatique à l'état vulcanisé, de part et d'autre du plan médian (M) sur une largeur axiale totale de 4 cm, sont vérifiées :

    ◦ le diamètre d'encombrement moyen D1 des premiers renforts (110) est compris entre 0,40 mm et 0,70 mm ;
    ◦ la densité $d_1$ des premiers renforts (110) dans la première couche de caoutchouc (C1), mesurée dans la direction axiale (Y), est comprise entre 70 et 130 fils/dm ;
    ◦ la densité, respectivement $d_2$ et $d_3$, des deuxièmes (120) et troisièmes (130) renforts dans respectivement les deuxième (C2) et troisième (C3) couches de caoutchouc, mesurée dans la direction axiale (Y), est comprise entre 120 et 180 fils/dm ;
    ◦ l'épaisseur moyenne $Ez_1$ de caoutchouc séparant un premier renfort (110) du deuxième renfort (120) qui lui est le plus proche, mesurée dans la direction radiale (Z), est comprise entre 0,25 et 0,40 mm ;
    ◦ l'épaisseur moyenne $Ez_2$ de caoutchouc séparant un deuxième renfort (120) du troisième renfort (130) qui lui est le plus proche, mesurée dans la direction radiale (Z), est comprise entre 0,35 et 0,60 mm ;

et d'autre part en ce que les inégalités suivantes sont vérifiées :

$$(1) \quad CT < 7{,}5\%$$

$$(2) \quad 0{,}20 < Ez_1 / (Ez_1 + D1 + D2) < 0{,}30$$

$$(3) \quad 0{,}30 < Ez_2 / (Ez_2 + D2 + D3) < 0{,}50$$

CT étant la contraction thermique des premiers renforts (110) en matériau textile thermorétractile, après 2 min à 185°C.

Grâce à sa construction spécifique et la combinaison des caractéristiques ci-dessus, ce stratifié composite multicouche s'est révélé capable de diminuer le poids des pneumatiques et leur résistance au roulement, à coût réduit grâce à l'utilisation de monofilaments en acier ne nécessitant aucune opération d'assemblage préalable, tout ceci sans pénaliser la rigidité de dérive ni l'endurance sous conditions de roulage particulièrement sévères.
Il présente en outre l'avantage d'être très faiblement hystérétique comparativement aux stratifiés utilisés conventionnellement dans les ceintures des pneumatiques du type tourisme ou camionnette.
Le stratifié composite multicouche selon l'invention est utilisable comme élément de renforcement de ceinture de tout type de pneumatique, particulièrement pour véhicule tourisme incluant notamment les véhicules 4x4 et "SUV" (*Sport Utility Vehicles*) ou pour véhicule camionnette.

L'invention ainsi que ses avantages seront aisément compris à la lumière de la description détaillée et des exemples de réalisation qui suivent, ainsi que des figures 1 et 2 relatives à ces exemples qui schématisent (sauf indication contraire, sans respect d'une échelle spécifique) :

- en coupe radiale (c'est-à-dire selon un plan contenant l'axe de rotation du pneumatique), un exemple de pneumatique (1) conforme à l'invention, incorporant dans sa ceinture (10) un stratifié composite multicouche conformément à l'invention (Fig. 1) ;
- en coupe transversale, le stratifié composite multicouche (10a, 10b, 10c) utilisé dans le pneumatique (1) conforme à l'invention (Fig. 2).

## 4. DEFINITIONS

Dans la présente demande, on entend par :

- "caoutchouc" ou "élastomère" (les deux termes étant considérés comme synonymes) : tout type d'élastomère, qu'il soit du type diénique ou du type non diénique par exemple thermoplastique ;
- "composition de caoutchouc" ou "composition caoutchouteuse" : une composition qui comporte au moins un caoutchouc et une charge ;
- "couche" : une feuille, bande ou tout autre élément d'épaisseur relativement faible par rapport à ses autres dimensions, de préférence dont le rapport de l'épaisseur sur la plus grande des autres dimensions est inférieur à 0,5, plus préférentiellement inférieur à 0,1 ;
- "direction axiale" : une direction sensiblement parallèle à l'axe de rotation du pneumatique ;
- "direction circonférentielle" : une direction qui est sensiblement perpendiculaire à la fois à la direction axiale et à un rayon du pneumatique (en d'autres termes, tangente à un cercle dont le centre est sur l'axe de rotation du pneumatique) ;
- "direction radiale" : une direction selon un rayon du pneumatique, c'est-à-dire une direction quelconque passant par l'axe de rotation du pneumatique et sensiblement perpendiculairement à cette direction, c'est-à-dire faisant avec une perpendiculaire à cette direction un angle ne s'écartant pas de plus de 5 degrés ;
- "orienté selon un axe ou une direction" en parlant d'un élément quelconque tel qu'un renfort, un élément qui est orienté sensiblement parallèlement à cet axe ou cette direction, c'est-à-dire faisant avec cet axe ou cette direction un angle ne s'écartant pas de plus de 5 degrés (donc nul ou au plus égal à 5 degrés) ;
- "orienté perpendiculairement à un axe ou une direction" : en parlant d'un élément quelconque tel qu'un renfort, un élément qui est orienté sensiblement perpendiculairement à cet axe ou cette direction, c'est-à-dire faisant avec une perpendiculaire à cet axe ou cette direction un angle ne s'écartant pas de plus de 5 degrés ;
- "plan circonférentiel médian" (noté M) : le plan perpendiculaire à l'axe Y de rotation du pneumatique qui est situé à mi-distance des deux bourrelets et passe par le milieu de l'armature de sommet ou ceinture ;
- "renfort" ou "fil de renforcement" : tout brin long et fin c'est-à-dire filiforme, longiligne, de grande longueur relativement à sa section transversale, notamment tout filament unitaire, toute fibre multifilamentaire ou tout assemblage de tels filaments ou fibres tels qu'un retors ou un câble, ce brin ou fil pouvant être rectiligne comme non rectiligne, par exemple torsadé, ou ondulé, un tel brin ou fil étant susceptible de renforcer une matrice de caoutchouc (c'est-à-dire augmenter les propriétés en traction de la matrice) ;
- "renforts unidirectionnels" : des renforts essentiellement parallèles entre eux, c'est-à-dire orientés selon un même axe ;
- "stratifié" ou "stratifié multicouche" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

## 5. DESCRIPTION DETAILLEE DE L'INVENTION

A titre d'exemple, la figure 1 représente de manière très schématique (c'est-à-dire sans respect d'une échelle spécifique) une coupe radiale d'un pneumatique conforme à l'invention, par exemple pour véhicule du type tourisme ou camionnette, dont la ceinture comporte un stratifié composite multicouche selon l'invention.

Ce pneumatique (1) conforme à l'invention, définissant trois directions perpendiculaires, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) et dans le sommet (2), une armature de sommet ou ceinture (10) s'étendant dans le sommet (2) selon la direction circonférentielle (X) et situé radialement entre l'armature de carcasse (7) et la bande de roulement (3). L'armature de carcasse (7) est de manière connue constituée d'au moins une nappe de caoutchouc renforcée par des câblés textiles dits "radiaux", disposés pratiquement parallèles les uns aux autres et s'étendent d'un bourrelet à l'autre de manière à former un angle généralement compris entre 80° et 90° avec le plan circonférentiel médian M ; elle est ici, à titre d'exemple, enroulée autour de deux tringles (6) dans chaque bourrelet (5), le retournement (8) de cette armature (7) étant par exemple disposé vers l'extérieur du pneumatique (1) qui est ici représenté monté sur sa jante (9).

Selon la présente invention, conformément à la représentation de la figure 2 qui sera détaillée ultérieurement, la ceinture (10) du pneumatique (1) comporte un stratifié composite multicouche comportant trois couches (10a, 10b, 10c) superposées de renforts, lesdits renforts étant dans chaque couche unidirectionnels et noyés dans une épaisseur de caoutchouc (respectivement C1, C2, C3), avec :

○ côté bande de roulement, une première couche de caoutchouc (C1) comportant une première rangée de renforts (110) orientés selon un angle alpha ($\alpha$) de -5 à +5 degrés par rapport à la direction circonférentielle (X), ces renforts (110) dits premiers renforts étant en matériau textile thermorétractile ;
○ au contact de et sous la première couche (C1), une deuxième couche de caoutchouc (C2) comportant une deuxième rangée de renforts (120) orientés selon un angle beta ($\beta$) donné, positif ou négatif, compris entre 10 et 30 degrés par rapport à la direction circonférentielle (X), ces renforts (120) dits deuxièmes renforts étant des renforts métalliques ;
○ au contact de et sous la deuxième couche (C2), une troisième couche de caoutchouc (C3) comportant une troisième rangée de renforts (130) orientés selon un angle gamma ($\gamma$) opposé à l'angle beta, lui-même compris entre 10 et 30 degrés par rapport à la direction circonférentielle (X), ces renforts (130) dits troisièmes renforts étant des renforts métalliques.

Selon l'invention, les angles $\beta$ et $\gamma$ de sens opposés, tous deux compris entre 10° et 30°, peuvent être identiques ou différents, c'est-à-dire que les deuxièmes (120) et troisièmes (130) renforts peuvent être disposés symétriquement ou pas de part et d'autre du plan circonférentiel médian (M) précédemment défini.

Dans ce pneumatique schématisé à la figure 1, on comprendra bien entendu que la bande de roulement 3, le stratifié multicouche 10 et l'armature de carcasse 7 peuvent être ou non au contact les uns des autres, même si ces parties ont été volontairement séparées sur la figure 1, schématiquement, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Dans le pneu de l'invention, les deuxièmes (120) et troisièmes (130) renforts consistent par définition en des monofilaments en acier dont le diamètre, respectivement noté D2 et D3, est compris entre 0,20 mm et 0,50 mm, de préférence supérieur à 0,25 mm et inférieur à 0,40 mm. Plus préférentiellement, pour une endurance optimale du pneu de l'invention, notamment sous des conditions de roulage sévères, on préfère que D2 et D3 soient compris dans un domaine de 0,28 à 0,35 mm.

Par « monofilament » ou « monofil » en acier, on entend ici tout filament unitaire en acier, quelle que soit la forme de sa section droite, dont le diamètre ou l'épaisseur D est supérieur à 100 $\mu$m, D représentant la plus petite dimension de sa section droite lorsque cette dernière n'est pas circulaire. Cette définition couvre donc aussi bien des monofilaments de forme essentiellement cylindrique (à section droite circulaire) que des monofilaments de forme différente, par exemple des mono filaments oblongs (de forme aplatie) ; dans le deuxième cas (section non circulaire), le rapport de la plus grande dimension sur la plus petite dimension de la section droite est de préférence inférieur à 50, plus préférentiellement inférieur à 30, en particulier inférieur à 20.

Ce pneumatique de l'invention a pour autres caractéristiques essentielles les caractéristiques qui suivent, mesurées dans la partie centrale de la ceinture du pneumatique à l'état vulcanisé, de part et d'autre du plan médian (M) sur une largeur axiale totale de 4 cm (soit entre - 2 cm et + 2 cm par rapport au plan médian M) :

○ le diamètre d'encombrement moyen D1 des premiers renforts (110) est compris entre 0,40 mm et 0,70 mm;
○ la densité $d_1$ des premiers renforts (110) dans la première couche de caoutchouc (C1), mesurée dans la direction axiale (Y), est comprise entre 70 et 130 fils/dm (décimètre, c'est-à-dire par 100 mm de couche de caoutchouc);

∘ la densité, notée $d_2$ et $d_3$, des deuxièmes (120) et troisièmes (130) renforts dans respectivement les deuxième (C2) et troisième (C3) couches de caoutchouc, mesurée dans la direction axiale (Y), est comprise entre 120 et 180 fils/dm ;

∘ l'épaisseur moyenne $Ez_1$ de caoutchouc séparant un premier renfort 110 (de la première couche C1) du deuxième renfort 120 (de la deuxième couche C2) qui lui est le plus proche, mesurée dans la direction radiale (Z), est comprise entre 0,25 et 0,40 mm ;

∘ l'épaisseur moyenne $Ez_2$ de caoutchouc séparant un deuxième renfort 120 (de la deuxième couche C2) du troisième renfort 130 (de la troisième couche C3) qui lui est le plus proche, mesurée dans la direction radiale (Z), est comprise entre 0,35 et 0,60 mm.

La figure 2 représente de manière schématique (sans respect d'une échelle spécifique), en coupe transversale, le stratifié composite multicouche (10a, 10b, 10c) utilisé comme ceinture (10) dans le pneu (1) conforme à l'invention de la figure 1.

Comme illustré à la figure 2, $Ez_1$ est la moyenne des épaisseurs ($Ez_{1(1)}$, $Ez_{1(2)}$, $Ez_{1(3)}$, ..., $Ez_{1(i)}$) de caoutchouc séparant un premier renfort (110) du deuxième renfort (120) qui lui est le plus proche, ces épaisseurs étant chacune mesurées dans la direction radiale Z, et moyennées sur une distance axiale totale comprise entre - 2,0 cm et + 2,0 cm par rapport au centre de la ceinture (soit, par exemple au total environ 40 mesures si l'on trouve dix renforts (110) par cm dans la couche C1).

Exprimé autrement, $Ez_1$ est la moyenne des distances minimales $Ez_{1(i)}$ séparant « dos à dos » chaque premier renfort (110) du deuxième renfort (120) qui lui est le plus proche dans la direction radiale Z, cette moyenne étant calculée sur l'ensemble des premiers renforts (110) présents dans la partie centrale de la ceinture, dans un intervalle axial s'étendant entre - 2 cm et + 2 cm par rapport au plan médian M.

De même, $Ez_2$ est la moyenne des épaisseurs de caoutchouc ($Ez_{2(1)}$, $Ez_{2(2)}$, $Ez_{2(3)}$, ..., $Ez_{2(i)}$) séparant un deuxième renfort (120) du troisième renfort (130) qui lui est le plus proche, mesurées dans la direction radiale Z, cette moyenne étant calculée sur une distance axiale totale comprise entre - 2,0 cm et + 2,0 cm par rapport au centre de la ceinture. Exprimé différemment, ces épaisseurs représentent les distances minimales qui séparent « dos à dos » le deuxième renfort (120) du troisième renfort (130) qui lui est le plus proche dans la direction radiale Z.

Exprimé différemment, $Ez_2$ est la moyenne des distances minimales $Ez_{2(i)}$ séparant « dos à dos » chaque deuxième renfort (120) du troisième renfort (130) qui lui est le plus proche dans la direction radiale Z, cette moyenne étant calculée sur l'ensemble des deuxièmes renforts (120) présents dans la partie centrale de la ceinture, dans un intervalle axial s'étendant entre - 2 cm et + 2 cm par rapport au plan médian M.

Le pneumatique de l'invention vérifie en outre les inégalités suivantes :

$$(1) \quad CT < 7,5\% \ ;$$

$$(2) \quad 0,20 < Ez_1 \ / \ (Ez_1 + D1 + D2) < 0,30 \ ;$$

$$(3) \quad 0,30 < Ez_2 \ / \ (Ez_2 + D2 + D3) < 0,50 \ ,$$

CT étant la contraction thermique des premiers renforts (110) en matériau textile thermorétractile, après 2 min à 185°C.

Il s'agit en d'autres termes de la contraction relative de ces premiers renforts (110) qui est par définition inférieure à 7,5% dans les conditions énoncées ci-après du test. CT est de préférence inférieure à 3,5%, plus préférentiellement inférieur à 3%, valeurs qui se sont révélées optimales pour la stabilité de fabrication et de dimensionnement des enveloppes de pneumatiques, en particulier lors des phases de cuisson et refroidissement des ces dernières.

La grandeur CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéaire de l'échantillon testé). A longueur constante, on mesure également le maximum de la force de contraction (notée $F_C$) à l'aide du test ci-dessus, cette fois à une température de 180°C et sous 3% d'élongation. Cette force de contraction $F_C$ est préférentiellement supérieure à 20 N (Newton). Une force de contraction élevée s'est révélée particulièrement favorable à la capacité de frettage des premiers renforts (110) en matériau textile thermorétractile, vis-à-vis de l'armature de sommet du pneumatique lorsque ce dernier s'échauffe sous une haute vitesse de roulage.

Les grandeurs CT et Fc ci-dessus peuvent être indistinctement mesurées sur les renforts textiles initiaux encollés avant leur incorporation dans le stratifié et le pneumatique, ou bien mesurée sur ces renforts une fois extraits de la zone centrale du pneumatique vulcanisé et de préférence « dégommés » (c'est-à-dire débarrassés du caoutchouc qui les enrobe dans la couche C1).

Tout matériau textile thermorétractile vérifiant les caractéristiques de contraction CT énoncées ci-dessus convient. De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Sont également utilisables, dans la mesure où ils vérifient la caractéristique CT préconisée, des renforts hybrides constitués de deux (au moins deux) matériaux différents tels que par exemple des câblés hybrides aramide/nylon, aramide/polyester, aramide/polycétone.

Selon un mode de réalisation particulièrement préférentiel, le matériau textile thermorétractile est un polyester, notamment PET ou PEN, tout particulièrement un PET. Plus préférentiellement encore, le polyester utilisé est un PET HMLS (« *High Modulus Low Shrinkage »*).

Les premiers renforts en matériau thermorétractile peuvent avoir toute forme connue, il peut s'agir certes de monofilaments mais le plus souvent ils sont constitués de fibres multifilamentaires retordues ensemble sous forme de cordes textiles. On entend de manière usuelle par diamètre d'encombrement le diamètre du cylindre de révolution imaginaire qui entoure de tels premiers renforts dans le cas général où ces derniers ne sont pas à section droite circulaire (contrairement au cas simple de filaments unitaires).

Selon un mode de réalisation préférentiel de l'invention, pour une performance optimisée du pneu de l'invention en termes de résistance au roulement, poussée de dérive et endurance au roulage, on a au moins une, plus préférentiellement la totalité des caractéristiques ci-après qui est vérifiée :

- ∘ le diamètre D1 est compris entre 0,45 mm et 0,65 mm ;
- ∘ la densité $d_1$ est comprise entre 80 et 120 fils/dm, plus préférentiellement entre 90 et 110 fils/dm ;
- ∘ les densités $d_2$ et $d_3$ sont comprises entre 130 et 170 fils/dm ;
- ∘ l'épaisseur $Ez_1$ est comprise entre 0,25 et 0,35 mm, plus préférentiellement entre 0,275 mm et 0,325 mm ;
- ∘ l'épaisseur $Ez_2$ est comprise entre 0,35 et 0,55 mm, plus préférentiellement entre 0,375 mm et 0,525 mm ;
- ∘ l'épaisseur totale du stratifié composite multicouche, c'est-à-dire de ses trois couches (C1, C2, C3) superposées, mesurée selon la direction radiale Z, est comprise entre 1,8 et 2,7 mm, plus préférentiellement entre 2,0 et 2,5 mm.

Selon un autre mode de réalisation préférentiel de l'invention, combiné ou non à l'une quelconque ou la totalité des caractéristiques préférentielles ci-dessus, on a au moins une inégalité ci-dessous, plus préférentiellement la totalité des inégalités ci-dessous qui est vérifiée :

$$0,225 < Ez_1 / (Ez_1 + D1 + D2) < 0,275$$

$$0,325 < Ez_2 / (Ez_2 + D2 + D3) < 0,475$$

$$0,325 < (Ez_1 + Ez_2) / (Ez_1 + Ez_2 + D1 + D2 + D3) < 0,425 \,.$$

Les premiers renforts (110) en matériau textile thermorétractile peuvent prendre toute forme connue, il peut d'agir par exemple de monofilaments élémentaires de diamètre important (par exemple égal ou supérieur à 50 $\mu$m), de fibres multifilamentaires (constituées d'une pluralité de filaments élémentaires de faible diamètre, typiquement inférieur à 30 $\mu$m), de retors textiles formés de plusieurs fibres retordues ensemble, de câbles textiles formés de plusieurs fibres ou monofilaments câblés ou retordus ensemble.

Par définition, les deuxièmes (120) et troisièmes (130) renforts sont par définition des monofilaments en acier. De préférence, l'acier est un acier au carbone tel que ceux utilisés dans les câbles type "*steel cords"* pour pneumatiques ; mais il est bien entendu possible d'utiliser d'autres aciers, par exemple des aciers inoxydables, ou d'autres alliages.

Selon un mode de réalisation préférentiel, lorsqu'un acier au carbone est utilisé, sa teneur en carbone (% en poids d'acier) est comprise dans un domaine de 0,8% à 1,2% ; selon un autre mode de réalisation préférentiel, la teneur en carbone de l'acier est comprise dans un domaine de 0,6% à 0,8%. L'invention s'applique en particulier à des aciers du type *steel cord* à résistance normale (dit "NT" pour "*Normal Tensile*") ou à haute résistance (dit "HT" pour *"High Tensile*"), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord* à très haute résistance (dit "SHT" pour " *Super High Tensile*"), ultra-haute résistance (dit "UHT" pour *"Ultra High Tensile* " ou "MT" pour *"Mega Tensile*"), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Pour ce qui concerne les renforts (deuxième et troisièmes) en acier, les mesures de force à la rupture, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en oeuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Chaque couche (C1, C2, C3) de composition de caoutchouc (ou ci-après "couche de caoutchouc") constitutive du stratifié composite multicouche, est à base d'au moins un élastomère et une charge.

De préférence, le caoutchouc est un caoutchouc diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

Chaque composition de caoutchouc peut comporter un seul ou plusieurs élastomère(s) diénique(s), également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m$^2$/g, de préférence de 30 à 400 m$^2$/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Pour faire adhérer les premiers, deuxièmes et troisièmes renforts à leurs trois couches de caoutchouc (C1, C2, C3) respectives précédemment décrites, on pourra utiliser tout système adhésif approprié, par exemple une colle textile du type "RFL" (résorcinol-formaldéhyde-latex) ou équivalente pour ce qui concerne les premiers renforts textiles, ou par exemple un revêtement adhésif tel que du laiton ou du zinc pour ce qui concerne les deuxièmes et troisièmes renforts en acier ; toutefois, on peut aussi utiliser un acier clair, c'est-à-dire non revêtu.

## 6. EXEMPLES DE REALISATION DE L'INVENTION

Les essais qui suivent démontrent que, grâce à sa construction spécifique, le stratifié composite multicouche selon l'invention permet de diminuer le poids et donc la résistance au roulement des pneumatiques, à coût réduit grâce à l'emploi de monofils en acier non câblés, tout ceci et avant tout sans dégrader la rigidité de dérive ni l'endurance globale de ces pneumatiques.

Ces essais comparatifs ont été conduits sur des pneus pour véhicule tourisme de dimensions 205/55 R16, conventionnellement fabriqués et en tous points identiques hormis la construction de leur stratifié composite multicouche.

### A) Pneumatiques testés

Dans les pneus conformes à l'invention de ces exemples, conformément à la représentation schématique de la figure 2, les renforts (110) sont des retors en polyamide 66, chaque retors consistant en 2 filés de 140 tex qui ont été retordus ensemble (sur câbleuse directe) à 250 tours/mètre, dont le diamètre D1 est égal à environ 0,66 mm ; leur CT est égal à environ 7% et leur force de contraction Fc est égale à environ 28 N.

La première couche de caoutchouc (C1) enrobant les renforts textiles (110) est une composition de caoutchouc conventionnelle pour calandrage de renforts textiles, à base de caoutchouc naturel, de noir de carbone, d'un système de vulcanisation et des additifs usuels ; l'adhésion entre les retors en polyamide et la couche de caoutchouc est assurée de manière connue par exemple par une simple colle textile type "RFL" (résorcinol-formaldéhyde-latex).

Pour la fabrication de cette première couche (C1), on a procédé de manière bien connue de l'homme du métier, par une opération de calandrage des retors textiles (110) entre deux couches de composition de caoutchouc à l'état cru (non vulcanisé) ayant chacune une épaisseur d'environ 0,25 mm.

Les renforts métalliques (120) et (130) sont des monofils en acier au carbone micro-allié (0,9% de carbone et 0,2% de Cr) type UHT ayant une résistance Rm de l'ordre de 3650 MPa (force rupture de 258 N), un allongement total At de 2,3%, dont le diamètre (D2, D3) est égal à 0,30 mm.

Les deuxième (C2) et troisième (C3) couches de caoutchouc enrobant ces monofils en acier (120, 130) sont constituées par une composition conventionnelle pour calandrage de nappes métalliques de ceinture de pneumatique, typiquement à base de caoutchouc naturel, de noir de carbone, d'un système de vulcanisation et des additifs usuels tels que sels de cobalt comme promoteurs d'adhésion.

Pour la fabrication de ces deux couches (C2, C3), on a procédé de manière bien connue de l'homme du métier, par calandrage des monofils (130) entre deux couches de composition de caoutchouc à l'état cru (non vulcanisé) ayant chacune une épaisseur d'environ 0,32 mm.

La densité $d_1$ des retors textiles (110) dans la première couche (C1), mesurée dans la direction axiale (Y), est égale à environ 100 fils/dm, celle (respectivement $d_2$ et $d_3$) des deuxièmes (120) et troisièmes (130) monofils en acier est égale à environ 160 fils/dm.

Ainsi, dans un intervalle s'étendant axialement entre - 2 cm et + 2 cm de part et d'autre du plan médian M, il y a environ 40 (soit 20 de part et d'autre) retors textiles (110) et environ 64 (soit 32 de part et d'autre) deuxièmes (120) et troisièmes (130) monofils en acier.

L'épaisseur moyenne mesurée $Ez_1$ de caoutchouc séparant ces retors textiles (110) des monofils en acier (120) était égale à environ 0,31 mm tandis que l'épaisseur moyenne $Ez_2$ de caoutchouc séparant les monofils acier (120) des autres monofils acier (130) était voisine de 0,45 mm. L'épaisseur moyenne totale du stratifié selon l'invention, mesurée dans la direction radiale, était égale à environ 2,3 mm.

Ainsi, dans cet exemple conforme à l'invention, on note que les trois inégalités ci-dessous, particulièrement préférentielles, sont bien vérifiées :

$$0,225 < Ez_1 / (Ez_1 + D1 + D2) < 0,275$$

$$0,325 < Ez_2 / (Ez_2 + D2 + D3) < 0,475$$

$$0,325 < (Ez_1 + Ez_2) / (Ez_1 + Ez_2 + D1 + D2 + D3) < 0,425 \ .$$

Toutes les données indiquées ci-dessus (D1, D2, D3, $d_1$, $d_2$, $d_3$, $Ez_1$ et $Ez_2$) sont des valeurs moyennes mesurées expérimentalement par un opérateur sur des photographies de coupes radiales des pneumatiques opérées dans la partie centrale de la ceinture, comme indiqué précédemment 2 cm de part et d'autre du plan médian (M).

Les pneus témoins utilisés ont la même architecture que les pneus de l'invention, hormis les caractéristiques techniques qui suivent : les renforts métalliques (120, 130) sont constitués de câbles conventionnels d'architecture « 2.30 » en acier SHT (Rm égale à environ 3170 MPa ; force rupture de 450 N) constitués de 2 fils de diamètre 0,30 mm câblés ensemble selon un pas de 14 mm ; le diamètre (encombrement) de ces câbles est donc de 0,6 mm ; ils sont disposés selon une densité d'environ 85 fils/dm ; l'épaisseur moyenne mesurée $Ez_1$ de caoutchouc séparant les retors en nylon (110) des câbles en acier (120) était égale à environ 0,31 mm tandis que l'épaisseur moyenne mesurée $Ez_2$ de caoutchouc séparant les câbles acier (120) était de l'ordre de 0,50 mm. L'épaisseur moyenne totale du stratifié, mesurée dans la direction radiale, était égale à environ 3,0 mm.

Pour la fabrication des deux couches métalliques ci-dessus, on a procédé de manière bien connue de l'homme du métier, par calandrage des câbles « 2.30 » entre deux couches de composition de caoutchouc à l'état cru (non vulcanisé) ayant chacune une épaisseur d'environ 0,40 mm.

Dans le stratifié composite multicouche de ces pneus témoins, on peut noter en particulier que, contrairement au cas de l'invention, aucune des inégalités essentielles suivantes n'est vérifiée :

$$0,20 < Ez_1 / (Ez_1 + D1 + D2) < 0,30 \ ;$$

$$0,30 < Ez_2 / (Ez_2 + D2 + D3) < 0,50 \ .$$

B) <u>Résultats des tests comparatifs</u>

Lors d'une première série de tests réalisés sur machines, on a constaté tout d'abord que les pneus de l'invention, comparativement aux pneus témoin, présentaient :

- un gain de poids d'environ 11% sur le stratifié composite multicouche, soit un gain de poids de 2% environ sur le pneu lui-même ;
- un gain de résistance au roulement d'environ 2% (soit environ 0,150 kg/tonne) ;
- de manière inattendue, malgré cet allègement notable de la ceinture, une poussée de dérive identique.

La résistance au roulement a été mesurée sur un volant, selon la méthode ISO 87-67 (1992). Pour mesurer la poussée de dérive, on a fait rouler chaque pneumatique à une vitesse constante de 80 km/h sur une machine automatique appropriée (machine type "sol-plan" commercialisée par la société MTS), en faisant varier la charge notée "Z", sous un angle de dérive de 1 degré, et on a mesuré de manière connue la rigidité ou poussée de dérive notée "D" (corrigée de la poussée à dérive nulle), en enregistrant à l'aide de capteurs l'effort transversal sur la roue en fonction de cette charge Z ; la poussée de dérive est la pente à l'origine de la courbe D(Z).

Puis, des tests de roulage réels ont été ensuite effectués soit sur machine soit sur véhicule (marque « Volkswagen » type « Golf ») pour comparer l'endurance des pneumatiques, témoins et conformes à l'invention, sous différentes condition de roulage.

Tout d'abord, l'endurance en roulage à très haute vitesse est appréciée en soumettant chaque pneumatique, sur machine, à une montée progressive en vitesse, selon des paliers déterminés, jusqu'à une vitesse limite préalablement fixée (supérieure à 250 km/h) ou l'éventuelle destruction, avant fin du test, des pneus testés.

Puis l'endurance sous très forte dérive a été évaluée par roulage sur véhicule sur un circuit très virageux, sous des conditions de surcharge, de sous-gonflage et selon différents cycles de vitesses prédéterminés donnant de très fortes accélérations transversales, le tout pendant 1 000 km ; après ce test particulièrement sévère, chaque pneu testé est décortiqué (par analyse destructive) et on compte le nombre de ruptures éventuelles des renforts métalliques (120, 130) dans les couches concernées (C2, C3) du stratifié composite multicouche.

Enfin, l'endurance en roulage de très longue durée (40 000 km) sous conditions très sévères a également été testée, sur machine de roulage automatique, selon différents cycles prédéterminés de pression et de surcharge, à vitesse constante ; après quoi, chaque pneu testé a été décortiqué et on a observé l'état général de leur stratifié composite multicouche, particulièrement dans les zones épaules des pneumatiques qui sont soumises de manière connue au plus fort échauffement.

A l'issue de cette seconde série de tests, on a observé que les pneus conformes à l'invention, comparativement aux pneus témoins, possédaient de manière surprenante pour l'homme du métier :

- une endurance en roulage à haute vitesse équivalente (aucune destruction constatée des pneumatiques testés, dans les deux cas) ;
- une endurance sous très forte dérive également équivalente (aucune rupture constatée des renforts métalliques, dans les deux cas) ;
- enfin, une endurance en roulage de très longue durée améliorée sous conditions de roulage extrêmement sévères (meilleur aspect du stratifié composite multicouche conforme à l'invention).

Ainsi, à la condition de respecter l'ensemble des caractéristiques techniques essentielles précédemment exposées, notamment d'utiliser d'une part des renforts circonférentiels textiles (110) dont la thermo-rétractabilité est contrôlée et d'autres part des renforts métalliques (120, 130) sous forme de monofils de faible diamètre, dans les limites de construction préconisées, on a constaté qu'il était encore possible de réduire de manière notable l'épaisseur globale des ceintures de pneumatiques, sans nuire à la bonne mise en oeuvre et différentiation des fonctions d'une part de frettage apportées par les renforts circonférentiels de la première couche, d'autre part de rigidification apportées par les renforts métalliques des deux autres couches.

L'invention permet de manière inattendue de diminuer le poids et la résistance au roulement des pneumatiques tourisme ou camionnette, sans nuire à la rigidité de dérive et donc au comportement routier, tout en offrant une endurance en roulage au moins équivalente sinon améliorée, même sous des conditions de roulage particulièrement sévères.

## Revendications

1. Pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) et dans le sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c) comportant au moins trois couches superposées de renforts (110, 120, 130), lesdits renforts étant dans chaque couche unidirectionnels et noyés dans une épaisseur de caoutchouc (respectivement C1, C2, C3), avec :

   o côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
   o au contact de la première couche (10a) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
   o au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), ces renforts (130) dits troisièmes renforts étant des renforts métalliques ;

o les deuxièmes (120) et troisièmes (130) renforts consistant en des monofilaments en acier dont le diamètre ou l'épaisseur, noté respectivement D2 et D3, étant compris entre 0,20 mm et 0,50 mm ;

**caractérisé en ce que** d'une part : les caractéristiques suivantes, mesurées dans la partie centrale de la ceinture du pneumatique à l'état vulcanisé, de part et d'autre du plan médian (M) sur une largeur axiale totale de 4 cm, sont vérifiées :

◦ le diamètre d'encombrement moyen D1 des premiers renforts (110) est compris entre 0,40 mm et 0,70 mm ;
◦ la densité $d_1$ des premiers renforts (110) dans la première couche de caoutchouc (C1), mesurée dans la direction axiale (Y), est comprise entre 70 et 130 fils/dm ;
◦ la densité, respectivement $d_2$ et $d_3$, des deuxièmes (120) et troisièmes (130) renforts dans respectivement les deuxième (C2) et troisième (C3) couches de caoutchouc, mesurée dans la direction axiale (Y), est comprise entre 120 et 180 fils/dm ;
◦ l'épaisseur moyenne $Ez_1$ de caoutchouc séparant un premier renfort (110) du deuxième renfort (120) qui lui est le plus proche, mesurée dans la direction radiale (Z), est comprise entre 0,25 et 0,40 mm ;
◦ l'épaisseur moyenne $Ez_2$ de caoutchouc séparant un deuxième renfort (120) du troisième renfort (130) qui lui est le plus proche, mesurée dans la direction radiale (Z), est comprise entre 0,35 et 0,60 mm ;

et **en ce que** d'autre part les inégalités suivantes sont vérifiées :

$$(1) \quad CT < 7,5\%$$

$$(2) \quad 0,20 < Ez_1 / (Ez_1 + D1 + D2) < 0,30$$

$$(3) \quad 0,30 < Ez_2 / (Ez_2 + D2 + D3) < 0,50$$

CT étant la contraction thermique des premiers renforts (110) en matériau textile thermorétractile, après 2 min à 185°C.

2. Pneumatique selon la revendication 1, dans lequel D2 et D3 sont chacun supérieurs à 0,25 mm et inférieurs à 0,40 mm.

3. Pneumatique selon la revendication 1 ou 2, dans lequel D1 est compris entre 0,45 mm et 0,65 mm.

4. Pneumatique selon l'une quelconque des revendications 1 à 3, dans lequel la densité $d_1$ est comprise entre 80 et 120 fils/dm.

5. Pneumatique selon l'une quelconque des revendications 1 à 4, dans lequel les densités $d_2$ et $d_3$ sont chacune comprise entre 130 et 170 fils/dm.

6. Pneumatique selon l'une quelconque des revendications 1 à 5, dans lequel l'épaisseur $Ez_1$ est comprise entre 0,25 et 0,35 mm.

7. Pneumatique selon l'une quelconque des revendications 1 à 6, dans lequel l'épaisseur $Ez_2$ est comprise entre 0,35 et 0,55 mm.

8. Pneumatique selon l'une quelconque des revendications 1 à 7, dans lequel la contraction thermique CT est inférieure à 3,5%.

9. Pneumatique selon l'une quelconque des revendications 1 à 8, dans lequel :

$$0,225 < Ez_1 / (Ez_1 + D1 + D2) < 0,275.$$

**10.** Pneumatique selon l'une quelconque des revendications 1 à 9, dans lequel :

$$0{,}325 < Ez_2 \,/\, (Ez_2 + D2 + D3) < 0{,}475$$

**11.** Pneumatique selon l'une quelconque des revendications 1 à 10, dans lequel :

$$0{,}325 < (Ez_1 + Ez_2) \,/\, (Ez_1 + Ez_2 + D1 + D2 + D3) < 0{,}425$$

**12.** Pneumatique selon l'une quelconque des revendications 1 à 11, dans lequel l'acier constitutif des deuxièmes (120) et troisièmes (130) renforts est un acier au carbone.

**13.** Pneumatique selon l'une quelconque des revendications 1 à 12, dans lequel le matériau textile thermorétractile est un polyester.


**Patentansprüche**

**1.** Radialreifen (1), welcher drei Hauptrichtungen, nämlich über den Umfang (X), axial (Y) und radial (Z), definiert, aufweisend einen Scheitel (2), welcher von einer Reifenlauffläche (3) überdeckt wird, zwei Flanken (4), zwei Wülste (5), wobei jede Flanke (4) jede Wulst (5) mit dem Scheitel (2) verbindet, eine Karkassenbewehrung (7), die in den beiden Wülsten (5) verankert ist und sich in den Flanken (4) und im Scheitel (2) erstreckt, eine Scheitel- oder Gürtelbewehrung (10), welche sich im Scheitel (2) gemäß einer Umfangsrichtung (X) erstreckt und radial zwischen der Karkassenbewehrung (7) und der Reifenlauffläche (3) angeordnet ist, wobei der Gürtel (10) ein mehrschichtiges Verbundlaminat (10a, 10b, 10c) aufweist, welches mindestens drei übereinander gelegte Verstärkungsschichten (110, 120, 130) aufweist, wobei die Verstärkungen in jeder Schicht unidirektional und in einer Kautschuklage (jeweils C1, C2, C3) eingelassen sind, mit:

einer ersten Schicht (10a) aus Kautschuk (C1) auf der Seite der Reifenlauffläche, welche eine erste Reihe von Verstärkungen (110) aufweist, welche gemäß einem Winkel alpha von -5 bis +5 Grad in Bezug auf die Umfangsrichtung (X) ausgerichtet sind, wobei diese Verstärkungen (110), so genannte erste Verstärkungen, aus wärmeschrumpfendem textilen Material bestehen;
einer, mit der ersten Schicht (10a) in Kontakt stehender und unter dieser ersten angeordneten zweiten Schicht (10b) aus Kautschuk (C2), welche eine zweite Reihe von Verstärkungen (120) aufweist, welche gemäß einem gegebenen positiven oder negativen Winkel beta,
der zwischen 10 und 30 Grad in Bezug auf die Umfangsrichtung (X) liegt, ausgerichtet sind, wobei diese Verstärkungen (120), so genannte zweite Verstärkungen, metallische Verstärkungen sind;
einer, mit der zweiten Schicht (10b) in Kontakt stehenden und unter dieser zweiten angeordneten dritten Schicht (10c) aus Kautschuk (C3), welche eine dritte Reihe von Verstärkungen (130) aufweist, welche gemäß einem dem Winkel beta entgegengesetzten Winkel gamma,
welcher selbst zwischen 10 und 30 Grad in Bezug auf die Umfangsrichtung (X) liegt, ausgerichtet sind, wobei diese Verstärkungen (130), so genannte dritte Verstärkungen, metallische Verstärkungen sind;
wobei die zweiten (120) und dritten (130) Verstärkungen aus Monofilamenten aus Stahl bestehen, deren Durchmesser oder Dicke, welche jeweils mit D2 und D3 bezeichnet wird, zwischen 0,20 mm und 0,50 mm liegt;
**dadurch gekennzeichnet, dass** einerseits:

die folgenden Merkmale, welche im zentralen Abschnitt des Gürtels des Reifens im vulkanisierten Zustand beiderseits der Mittelebene (M) über eine gesamte axiale Breite von 4 cm gemessen werden, bestätigt werden:

der mittlere Hauptdurchmesser D1 der ersten Verstärkungen (110) liegt zwischen 0,40 mm und 0,70 mm;
die Dichte $d_1$ der ersten Verstärkungen (110) in der ersten Schicht aus Kautschuk (C1), welche in der axialen Richtung (Y) gemessen wird, liegt zwischen 70 und 130 Fäden/dm;
die Dichte, jeweils $d_2$ und $d_3$, der zweiten (120) und dritten (130) Verstärkungen in jeweils der zweiten (C2) und dritten (C3) Schicht aus Kautschuk, welche in der axialen Richtung (Y) gemessen wird, liegt zwischen 120 und 180 Fäden/dm;

die mittlere Dicke $Ez_1$ aus Kautschuk, welche eine erste Verstärkung (110) von der zweiten Verstärkung (120), die ihr am nächsten ist, trennt, liegt zwischen 0,25 und 0,40 mm, wenn sie in der radialen Richtung (Z) gemessen wird;

die mittlere Dicke $Ez_2$ aus Kautschuk, welche eine zweite Verstärkung (120) von der dritten Verstärkung (130), die ihr am nächsten ist, trennt, liegt zwischen 0,35 und 0,60 mm, wenn sie in der radialen Richtung (Z) gemessen wird;

und dass andererseits die folgenden Ungleichungen erfüllt sind:

$$(1) \quad CT < 7,5\%$$

$$(2) \quad 0,20 < Ez_1 / (Ez_1 + D1+D2) < 0,30$$

$$(3) \quad 0,30 < Ez_2 / (Ez_2 + D2 + D3) < 0,50$$

wobei CT die thermische Kontraktion der ersten Verstärkungen (110) aus wärmeschrumpfendem textilen Material nach 2 Min. bei 185°C ist.

2. Reifen nach Anspruch 1, bei welchem D2 und D3 jeweils größer als 0,25 mm und kleiner als 0,40 mm sind.

3. Reifen nach Anspruch 1 oder 2, bei welchem D1 zwischen 0,45 mm und 0,65 mm liegt.

4. Reifen nach einem der Ansprüche 1 bis 3, bei welchem die Dichte $d_1$ zwischen 80 und 120 Fäden/dm liegt.

5. Reifen nach einem der Ansprüche 1 bis 4, bei welchem die Dichten $d_2$ und $d_3$ jeweils zwischen 130 und 170 Fäden/dm liegen.

6. Reifen nach einem der Ansprüche 1 bis 5, bei welchem die Dicke $Ez_1$ zwischen 0,25 und 0,35 mm liegt.

7. Reifen nach einem der Ansprüche 1 bis 6, bei welchem die Dicke $Ez_2$ zwischen 0,35 und 0,55 mm liegt.

8. Reifen nach einem der Ansprüche 1 bis 7, bei welchem die thermische Kontraktion CT kleiner als 3,5% ist.

9. Reifen nach einem der Ansprüche 1 bis 8, bei welchem:

$$0,225 < Ez_1 / (Ez_1 + D1 + D2) < 0,275$$

10. Reifen nach einem der Ansprüche 1 bis 9, bei welchem:

$$0,325 < Ez_2 / (Ez_2 + D2 + D3) < 0,475$$

11. Reifen nach einem der Ansprüche 1 bis 10, bei welchem:

$$0,325 < (Ez_1+Ez_2) / (Ez_1+Ez_2+D1+D2+ D3) < 0,425$$

12. Reifen nach einem der Ansprüche 1 bis 11, bei welchem der für die zweiten (120) und die dritten (130) Verstärkungen wesentliche Stahl ein Kohlenstoffstahl ist.

13. Reifen nach einem der Ansprüche 1 bis 12, bei welchem das wärmeschrumpfende textile Material ein Polyester ist.

**Claims**

1.  Radial tyre (1), defining three main directions, circumferential (X), axial (Y) and radial (Z), comprising a crown (2) surmounted by a tread (3), two sidewalls (4), two beads (5), each sidewall (4) connecting each bead (5) to the crown (2), a carcass reinforcement (7) anchored in each of the beads (5) and extending in the sidewalls (4) and the crown (2), a crown reinforcement or belt (10) extending in the crown (2) in the circumferential direction (X) and situated radially between the carcass reinforcement (7) and the tread (3), the said belt (10) comprising a multilayer composite laminate (10a, 10b, 10c) comprising at least three superposed layers of reinforcers (110, 120, 130), the said reinforcers being unidirectional within each layer and embedded in a thickness of rubber (C1, C2, C3 respectively), with:

    ◦ on the tread side, a first layer (10a) of rubber (C1) comprising a first row of reinforcers (110) which are oriented at an angle alpha of -5 to +5 degrees with respect to the circumferential direction (X), these reinforcers (110) referred to as first reinforcers being made of a heat-shrinkable textile material;
    ◦ in contact with the first layer (10a) and arranged underneath the latter, a second layer (10b) of rubber (C2) comprising a second row of reinforcers (120) which, oriented at a given angle beta, positive or negative, are comprised between 10 and 30 degrees with respect to the circumferential direction (X), these reinforcers (120) referred to as secondary reinforcers being metal reinforcers;
    ◦ in contact with the second layer (10b) and arranged underneath the latter, a third layer (10c) of rubber (C3) comprising a third row of reinforcers (130) which are oriented at an angle gamma the opposite of the angle beta, itself comprised between 10 and 30 degrees with respect to the circumferential direction (X), these reinforcers (130) referred to as third reinforcers being metal reinforcers;
    ◦ the second (120) and third (130) reinforcers consisting of steel monofilaments of which the diameter, denoted D2 and D3 respectively, is comprised between 0.20 mm and 0.50 mm;

    **characterized in that**, on the one hand:

    the following features, measured in the central part of the belt of the tyre in the vulcanized state, on each side of the median plane (M) over a total axial width of 4 cm, are satisfied:

    ◦ the mean envelope diameter D1 of the first reinforcers (110) is comprised between 0.40 mm and 0.70 mm;
    ◦ the density $d_1$ of the first reinforcers (110) in the first layer of rubber (C1), measured in the axial direction (Y), is comprised between 70 and 130 threads/dm;
    ◦ the density, $d_2$ and $d_3$ respectively, of the second (120) and third (130) reinforcers in the second (C2) and third (C3) layers of rubber respectively, measured in the axial direction (Y), is comprised between 120 and 180 threads/dm;
    ◦ the mean thickness $Ez_1$ of rubber separating a first reinforcer (110) from the second reinforcer (120) closest to it, measured in the radial direction (Z), is comprised between 0.25 and 0.40 mm ;
    ◦ the mean thickness $Ez_2$ of rubber separating a second reinforcer (120) from the third reinforcer (130) closest to it, measured in the radial direction (Z), is comprised between 0.35 and 0.60 mm;

    and **in that**, on the other hand, the following inequalities are satisfied:

$$(1) \quad CT < 7.5\%$$

$$(2) \quad 0.20 < Ez_1 \, / \, (Ez_1 + D1 + D2) < 0.30$$

$$(3) \quad 0.30 < Ez_2 \, / \, (Ez_2 + D2 + D3) < 0.50$$

    CT being the thermal contraction of the first reinforcers (110) made of heat-shrinkable textile material, after 2 min at 185°C.

2.  Tyre according to Claim 1, in which the diameters D2 and D3 are each greater than 0.25 mm and less than 0.40 mm.

3.  Tyre according to Claim 1 or 2, in which the diameter D1 is comprised between 0.45 mm and 0.65 mm.

**4.** Tyre according to any one of Claims 1 to 3, in which the density $d_1$ is comprised between 80 and 120 threads/dm.

**5.** Tyre according to any one of Claims 1 to 4, in which the densities $d_2$ and $d_3$ are each comprised between 130 and 170 threads/dm.

**6.** Tyre according to any one of Claims 1 to 5, in which the thickness $Ez_1$ is comprised between 0.25 and 0.35 mm.

**7.** Tyre according to any one of Claims 1 to 6, in which the thickness $Ez_2$ is comprised between 0.35 and 0.55 mm.

**8.** Tyre according to any one of Claims 1 to 7, in which the thermal contraction CT is less than 3.5%.

**9.** Tyre according to any one of Claims 1 to 8, in which:

$$0.225 < Ez_1 / (Ez_1 + D1 + D2) < 0.275.$$

**10.** Tyre according to any one of Claims 1 to 9, in which :

$$0.325 < Ez_2 / (Ez_2 + D2 + D3) < 0.475.$$

**11.** Tyre according to any one of Claims 1 to 10, in which:

$$0.325 < (Ez_1 + Ez_2) / (Ez_1 + Ez_2 + D1 + D2 + D3) < 0.425.$$

**12.** Tyre according to any one of Claims 1 to 11, in which the steel of which the second (120) and third (130) reinforcers are made is a carbon steel.

**13.** Tyre according to any one of Claims 1 to 12, in which the heat-shrinkable textile material is a polyester.

## Fig. 1

## Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4371025 A
- FR 2504067
- US 4819705 A
- EP 738615 A
- EP 795426 A
- US 5858137 A
- EP 1162086 A
- US 20020011296 A
- EP 1184203 A
- US 20020055583 A
- EP 1066989 A